# FASCICULE DE BREVET EUROPEEN

(11) **EP 0 507 716 B1**
(45) Date de publication et mention de la délivrance du brevet: **06.03.1996**
(21) Numéro de dépôt: 92470013.1
(22) Date de dépôt: 25.03.1992
(51) Int. Cl.: F16K 5/06, F16K 11/087

(54) **Dispositif d'isolement et de raccordement de plusieurs voies de circulation de fluide et robinet comportant un tel dispositif**
Vorrichtung zur Isolierung und Verbindung von mehreren Fliesswegen für Flüssigkeiten und Hahn mit einer derartigen Vorrichtung
Device for isolating and connecting several fluid flow passages and valve comprising such a device

(30) Priorité: 03.04.1991 FR 9104219
(43) Date de publication de la demande: 07.10.1992
(73) Titulaire: COMAP, F-45550 Saint Denis de l'Hôtel (FR)
(72) Inventeur: Rager, Pierre, F-45530 Vitry aux Loges (FR)
(74) Mandataire: Maureau, Philippe

(56) Documents cités:
- EP-A- 0 055 066
- EP-A- 0 417 706
- US-A- 3 209 779
- US-A- 3 674 052

## Description

La présente invention se rapporte à un dispositif d'isolement et de raccordement pour canaliser un fluide dans trois canalisations.

Elle se rapporte plus particulièrement à un robinet d'isolement à trois orifices pour canaliser un fluide. Ledit robinet comprend un boisseau pouvant tourner autour d'un axe B-B et une tige de manoeuvre du boisseau.

Les brevets DE-A-1800017, FR-A-1465117 det FR-A-1530079 décrivent chacun un robinet à boisseau pouvant tourner autour d'un axe au moyen d'une tige de manoeuvre du boisseau. Le boisseau est sensiblement sphérique et percé d'un canal transversal par rapport à son axe de rotation.

En outre, le brevet DE-A-1800017 décrit un robinet comprenant un boisseau sphérique, un corps, deux garnitures d'étanchéïté, l'une en amont et l'autre en aval du boisseau, ledit boisseau étant serré dans le corps entre les deux garnitures d'étanchéïté. Le boisseau de ces robinets ne présente qu'un canal. Pour obtenir l'isolation d'un fluide entre trois voies d'une canalisation, il est nécessaire d'en monter au moins deux sur ladite canalisation.

La demanderesse connaît également des boisseaux percés en té de deux canaux débouchant dans trois voies, une voie verticale et deux voies horizontales permettant de relier la voie verticale aux deux voies horizontales, séparément ou ensemble, et notamment celui du dispositif décrit dans le document EP-A-0 312 505, qui est monté libre en rotation dans un boîtier autour d'un premier axe et percé d'un premier canal s'étendant le long d'un deuxième axe traversé approximativement perpendiculairement par le premier axe et présentant deux extrémités susceptibles d'être simultanément placées en regard chacune de l'un des orifices du boîtier et susceptibles d'être isolées des deux mêmes orifices dans et au voisinage d'au moins une troisième position du boisseau dans le boîtier, et d'un deuxième canal débouchant à une première extrémité dans le premier canal et dont la deuxième extrémité est en regard du troisième orifice du boîtier.

Mais, un robinet comprenant un boisseau de ce type ne permet pas de relier entre-elles les deux voies horizontales en les isolant de la voie verticale.

La présente invention a pour but de remédier à ces inconvénients et d'apporter divers avantages consistant essentiellement à obtenir avec un seul robinet, soit l'écoulement du fluide d'une voie amont dans deux voies aval, soit d'une voie amont dans une voie aval, soit la possibilité de fermer l'ensemble, donc l'isolation de chacune des voies par rapport aux autres. Ainsi, il est possible de mettre en communication avec l'arrivée de fluide une ou deux sorties. Un autre but de l'invention est d'éviter le contact du moyen de commande (tige de manoeuvre) avec le fluide afin de supprimer les risques de corrosion.

A cet effet, l'invention concerne un dispositif d'isolement et de raccordement de plusieurs voies de circulation de fluide, comportant un boîtier présentant au moins trois orifices d'accès respectif à ces voies, un boisseau monté libre en rotation dans le boîtier autour d'un premier axe, ce boisseau étant percé d'un premier canal s'étendant le long d'un deuxième axe traversé approximativement perpendiculairement par le premier axe et présentant deux extrémités susceptibles d'être simultanément placées en regard chacune de l'un des orifices du boîtier, dans et au voisinage de deux positions du boisseau dans le boîtier dans lesquelles la correspondance entre les orifices du boîtier et les extrémités du premier canal est inverse, ces deux extrémités étant susceptibles d'être isolées des deux mêmes orifices dans et au voisinage d'au moins une troisième position du boisseau dans le boîtier, le boisseau étant percé d'un second canal débouchant à une première extrémité dans le premier canal et dont la deuxième extrémité est susceptible d'être placée en regard du troisième orifice du boîtier dans et au voisinage d'une position particulière du boisseau, dispositif d'isolement et de raccordement caractérisé en ce que le second canal s'étend dans le boisseau le long d'un troisième axe incliné par rapport au premier axe, ladite position particulière du boisseau dans laquelle la deuxième extrémité du second canal est en regard du troisième orifice du boîtier est l'une des deux positions du boisseau dans lesquelles deux orifices du boîtier et les extrémités du premier canal sont en regard, cette deuxième extrémité du second canal est isolée de ce troisième orifice dans l'autre de ces deux positions, et une garniture d'étanchéïté comportant au moins un perçage en regard de chaque orifice du boîtier est insérée de manière étanche entre le boisseau et le boîtier.

L'invention concerne également un robinet comprenant un dispositif tel que défini plus haut, un mamelon, et deux bagues d'étanchéïté, respectivement en amont et en aval du boisseau, le boisseau étant serré entre les deux bagues d'étanchéïté par le vissage du mamelon dans le corps, et la garniture étant emprisonnée entre au moins lesdites deux bagues d'étanchéïté, le corps et le boisseau.

La Fig. 1 est une vue en coupe d'un robinet à boisseau selon l'invention.

La Fig. 2 est une vue du robinet à boisseau représenté à la Fig. 1, coupée suivant un plan contenant l'axe de rotation du boisseau.

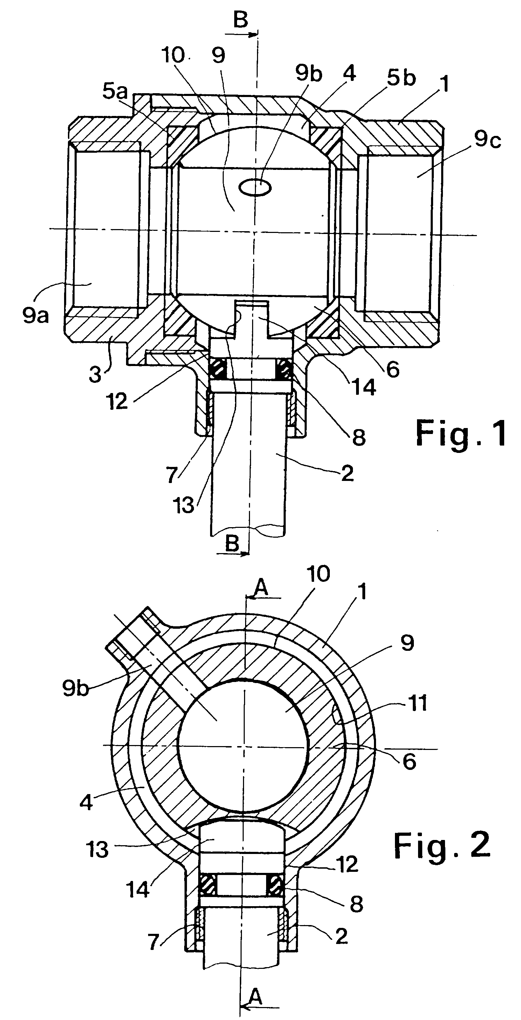

Suivant l'exemple de réalisation illustré aux Fig. 1 et 2, le robinet d'isolement à trois orifices 9a, 9b, 9c comprend un boisseau 6 pouvant tourner autour d'un axe correspondant à l'intersection des plans A-A et B-B et une tige de manoeuvre 2 du boisseau 6.

Ledit robinet comprend un corps 1, un mamelon 3, deux garnitures d'étanchéité, l'une 5a en amont et l'autre 5b en aval du boisseau 6. Ledit boisseau 6 est serré entre les deux garnitures d'étanchéité par le vissage du mamelon 3 dans le corps 1. Le robinet comprend également une garniture 4 emprisonnée entre les deux garnitures d'étanchéité, le mamelon 3, le corps 1 et le boisseau 6. De plus, le robinet comprend un écrou de tige 7 et un joint torique 8.

La tige de manoeuvre 2 est de forme partiellement cylindrique. De l'extrémité de contact avec le boisseau 6 vers l'extrémité de manoeuvre, la tige 2 présente un doigt 14 de forme sensiblement rectangulaire, fraisé à son extrémité. Les deux autres faces restant à une épaisseur proche du diamètre de la tige 2. Ensuite la tige 2 présente une extrémité cylindrique 12. En se rapprochant de l'extrémité de manoeuvre, la tige 2 comporte une gorge, après la surface cylindrique suivant la gorge, le diamètre de la tige 2 se réduit de manière à former un épaulement.

Ladite tige de manoeuvre 2 du boisseau 6 est maintenue au moyen de l'écrou 7 de la forme d'une bague filetée sur sa face extérieure et alésée au diamètre la tige de manoeuvre 2 sur sa face intérieure.

Le boisseau 6 du robinet selon l'invention est sphérique.

Ledit boisseau 6 est percé d'un canal 9 transversal par rapport plan B-B. Le boisseau 6 comprend un deuxième canal apte à déboucher par une extrémité dans l'orifice 9b et débouchant par une autre extrémité dans ledit canal 9 transversal par rapport au plan B-B. Le deuxième canal est percé suivant un angle de 45% par rapport au plan B-B et perpendiculairement au premier perçage. Ledit boisseau 6 présentant en outre une rainure 13 destinée à recevoir le doigt 14 d'extrémité de la tige de manoeuvre 2.

La surface externe 10 du boisseau 6, restant libre est enrobée par la garniture 4.

La garniture 4 présente une face interne 11 de forme sphérique tronçonnée suivant deux plans parallèles au plan B-B et centré par rapport au dit plan B-B. En outre, la garniture 4 présente deux perçages, le premier centré par rapport au plan B-B et de même diamètre que l'extrémité cylindrique 12 de la tige 2, le deuxième se situe à une distance égale de chacun des deux plans parallèles à l'axe B-B et son axe se trouvant à 135° du premier perçage.

La garniture 4 est déformable.

Les garnitures 5a et 5b sont de la forme d'une bague dont le diamètre extérieur est identique et constant et le diamètre intérieur est tronconique.

Le mamelon 3 est sensiblement de la forme d'un cylindre creux dont la surface cylindrique externe est filetée à une extrémité et lisse à l'autre extrémité et présente deux épaulements, chacun tourné vers une des extrémités.

La surface cylindrique interne du mamelon 3 est taraudée à une extrémité et lisse à l'autre extrémité et présente deux épaulements, chacun tourné vers une des extrémités.

Le taraudage débouche à l'autre extrémité que le filetage.

Le corps 1 est de la forme générale d'un parallélépipède rectangle comprenant une excroissance cylindrique et des perçages suivant trois axes. Un des perçages est réalisé suivant l'axe d'intersection des plans A-A et B-B et débouche perpendiculairement dans le perçage coaxial à l'excroissance cylindrique. L'axe du troisième perçage est à 45° du plan A-A et dans le plan B-B et débouche perpendiculairement dans le perçage coaxial à l'excroissance cylindrique. Ledit perçage coaxial à l'excroissance cylindrique a son axe contenu dans le plan A-A et perpendiculaire au plan B-B. L'excroissance cylindrique est filetée. Le perçage dont l'axe est compris dans le plan A-A est taraudé à une extrémité, puis présente deux épaulements successifs et débouche de l'excroissance cylindrique. Les deux autres perçages sont taraudés vers l'extérieur du corps 1.

La garniture 5b est montée au fond du deuxième épaulement du perçage du corps 1, dont l'axe est compris dans le plan A-A. La garniture 4 vient enrober le boisseau 6.

La partie dépassant l'enrobage par la garniture 4 du boisseau 6 vient se loger au contact de la surface interne de la garniture 5b. La garniture 4 s'appuyant sur la garniture 5b et le premier épaulement du perçage du corps 1, dont l'axe est compris dans le plan A-A. La garniture 5a est montée dans la partie cylindrique interne lisse du mamelon 3. Le vissage du mamelon 3 dans le taraudage du perçage dont l'axe est compris dans le plan A-A, du corps 1 vient serrer et maintenir dans leur logement le boisseau 6 et la garniture 4.

Le doigt 14 de la tige 2 coopère avec la rainure 13 du boisseau 6. La garniture 4 entoure la totalité de la circonférence de l'extrémité cylindrique 12 de la tige de manoeuvre 2. Le joint torique 8 est logé dans la gorge de la tige 2. Celle-ci est maintenue par l'écrou 7 vissé dans le corps 1 et en buté sur l'épaulement de la tige 2.

Dans la position représentée aux figures, le fluide entre par l'orifice amont 9a et s'écoule par les orifices 9b et 9c. Une rotation d'un quart de tour de la tige 2 entraîne une rotation d'un quart de tour du boisseau 6, ce qui isole tous les orifices les uns des autres. Le robinet est fermé.

En prolongeant ladite rotation d'un deuxième quart de tour, le fluide entre par l'orifice amont 9a et s'écoule uniquement par l'orifice 9c. L'orifice 9 b est isolé.

Ces positions de la tige de manoeuvre 2 permettent d'isoler totalement les orifices les uns par rapport aux autres et offrent la possibilité de faire communiquer l'arrivée de fluide avec une ou deux sorties.

Le robinet selon l'invention peut être connecté à des canalisations transportant un fluide à différentes températures.

## Revendications

1. Dispositif d'isolement et de raccordement de plusieurs voies de circulation de fluide, comportant un boîtier (1, 3) présentant au moins trois orifices (9a, 9b, 9c) d'accès respectif à ces voies, un boisseau (6) monté libre en rotation dans le boîtier autour d'un premier axe, ce boisseau étant percé d'un premier canal (9) s'étendant le long d'un deuxième axe traversé approximativement perpendiculairement par le premier axe et présentant deux extrémités susceptibles d'être simultanément placées en regard chacune de l'un des orifices (9a, 9c) du boîtier, dans et au voisinage de deux positions du boisseau dans le boîtier dans lesquelles la correspondance entre les orifices du boîtier et les extrémités du premier canal est inverse, ces deux extrémités étant susceptibles d'être isolées des deux mêmes orifices (9a, 9c) dans et au voisinage d'au moins une troisième position du boisseau dans le boîtier, le boisseau étant percé d'un second canal débouchant à une première extrémité dans le premier canal (9) et dont la deuxième extrémité est susceptible d'être placée en regard du troisième orifice (9b) du boîtier dans et au voisinage d'une position particulière du boisseau, dispositif d'isolement et de raccordement caractérisé en ce que le second canal s'étend dans le boisseau (6) le long d'un troisième axe incliné par rapport au premier axe, ladite position particulière du boisseau dans laquelle la deuxième extrémité du second canal est en regard du troisième orifice (9b) du boîtier est l'une des deux positions du boisseau dans lesquelles deux orifices (9a, 9c) du boîtier et les extrémités du premier canal (9) sont en regard, cette deuxième extrémité du second canal est isolée de ce troisième orifice dans l'autre de ces deux positions, et une garniture (4) d'étanchéïté comportant au moins un perçage en regard de chaque orifice du boîtier (1, 3) est insérée de manière étanche entre le boisseau et le boîtier.

2. Dispositif d'isolement et de raccordement de plusieurs voies de circulation de fluide, selon la revendication 1, caractérisé en ce qu'il comporte, pour manoeuvrer le boisseau (6), une tige de manoeuvre (2) présentant, à proximité d'une extrémité, une région cylindrique (12), et la garniture (4) entoure le pourtour circulaire de cette région cylindrique.

3. Dispositif d'isolement et de raccordement de plusieurs voies de circulation de fluide, selon l'une des revendications 1 et 2, caractérisé en ce qu'il comporte, pour manoeuvrer le boisseau (6), une tige de manoeuvre (2) maintenue au moyen d'une bague (7) filetée extérieurement et alésée au diamètre de la tige de manoeuvre (2) .

4. Dispositif d'isolement et de raccordement de plusieurs voies de circulation de fluide, selon la revendication 3, caractérisé en ce que la bague (7) est vissée dans le corps (1).

5. Dispositif d'isolement et de raccordement de plusieurs voies de circulation de fluide, selon l'une des revendications 1 à 4, caractérisé en ce que le boisseau (6) a la forme d'une sphère percée par un premier canal (9) la traversant de part en part et par un second canal débouchant perpendiculairement dans le premier canal et incliné approximativement à 45 degrés par rapport au premier axe, de pivotement du boisseau.

6. Dispositif d'isolement et de raccordement de plusieurs voies de circulation de fluide, selon au moins l'une des revendications 2 à 4, caractérisé en ce que le boisseau (6) présente une rainure (13) destinée à recevoir un doigt (14) d'extrémité de la tige de manoeuvre (2) .

7. Robinet comprenant un dispositif selon l'une des revendications 1 à 6, un mamelon (3), et deux bagues d'étanchéité (5a, 5b), respectivement en amont et en aval du boisseau (6), le boisseau (6) étant serré entre les deux bagues d'étanchéité par le vissage du mamelon (3) dans le corps (1), et la garniture (4) étant emprisonnée entre au moins lesdites deux bagues d'étanchéité, le corps et le boisseau.

8. Robinet selon la revendication 7, caractérisé en ce que la face interne (11) de la garniture (4) présente la forme d'une sphère tronçonnée suivant deux plans parallèles et comportant au moins deux perçages.

9. Robinet selon la revendication 7 ou 8, caractérisé en ce que la garniture (4) est déformable.

10. Robinet selon l'une des revendications 7 à 9, caractérisé en ce qu'il est appliqué à des canalisations contenant un fluide à différentes températures.

## Patentansprüche

1. Vorrichtung zur Absperrung und Verbindung von mehreren Fließwegen für Flüssigkeiten beinhaltend ein Gehäuse (1, 3), das wenigstens drei Zugangsöffnungen (9a, 9b, 9c) jeweils zu diesen Fließwegen, ein Küken (6), das im Gehäuse um eine erste Achse rotationsbeweglich angeordnet ist, wobei der Küken von einem ersten Kanal (9) durchquert wird, der sich entlang einer zweiten, zur ersten Achse nahezu rechtwinklig ausgerichteten Achse erstreckt und der zwei Enden aufweist, die in der Lage sind, gleichzeitig gegenüber jeder der beiden Öffnungen (9a, 9c) des Gehäuses positioniert werden zu können, in und in der Nähe der beiden Positionen des Kükens im Gehäuse, in denen die Verbindung zwischen den Öffnungen des Kükens und den Enden des ersten Kanals um 180° vertauscht sind, wobei die beiden Enden von denselben beiden Öffnungen (9a, 9c) abgesperrt werden können in und in der Nähe wenigstens einer weiteren dritten Position des Kükens im Gehäuse, wobei das Küken von einem zweiten Kanal durchquert wird, der mit seinem ersten Ende im ersten Kanal mündet und dessen zweites Ende gegenüber der dritten Öffnung (9d) des Gehäuses positioniert werden kann in und in der Nähe einer speziellen Position dieses Kükens, **dadurch gekennzeichnet,** daß der zweite Kanal sich im Küken (6) entlang einer dritten, zur ersten Achse schräg verlaufenden Achse erstreckt, daß die besagte spezielle Position des Kükens, in der das zweite Ende des zweiten Kanals gegenüber der dritten Öffnung (9b) des Gehäuses liegt, eine der beiden Positionen des Kükens ist, an denen die beiden Öffnungen (9a, 9c) des Gehäuses und die Enden des ersten Kanals (9) sich gegenüberliegen, in der anderen Position ist das zweite Ende des zweiten Kanals von der dritten Öffnung des Gehäuses isoliert, und wobei eine Dichtung mit wenigstens einer Bohrung bezüglich jeder Öffnung des Gehäuses (1, 3) zwischen Küken und Gehäuse abdichtend eingefügt ist.

2. Vorrichtung zur Absperrung und Verbindung von mehreren Fließwegen für Flüssigkeiten gemäß Anspruch 1, **dadurch gekennzeichnet, daß** sie zur Betätigung des Kükens (6) einen Betätigungsgriff (2) aufweist, der in der Nähe eines seiner Enden einen zylindrischen Bereich (12) besitzt und wobei der Einsatz (4) den ringförmigen Umfang dieses zylindrischen Bereiches um-schließt.

3. Vorrichtung zur Absperrung und Verbindung von mehreren Fließwegen für Flüssigkeiten nach einem der Ansprüche 1 und 2, **dadurch gekennzeichnet, daß** sie zur Betätigung des Kükens (6) einen Betätigungsgriff (2) aufweist, der mit Hilfe eines mit einem Außengewinde versehenen Ringes gehalten und auf den Durchmesser des Betätigungsgriffes aufgebohrt worden ist.

4. Vorrichtung zur Absperrung und Verbindung von mehreren Fließwegen für Flüssigkeiten nach Anspruch 3, **dadurch gekennzeichnet, daß** der Ring (7) in das Gehäuse (1) eingeschraubt ist.

5. Vorrichtung zur Absperrung und Verbindung von mehreren Fließwegen für Flüssigkeiten nach einem der Ansprüche 1 - 4, **dadurch gekennzeichnet, daß** das Küken (6) die Form einer Kugel besitzt und von einem ersten Kanal (9) von einer Seite zur anderen und durch einen zweiten Kanal durchquert wird, der rechtwinklig in den ersten Kanal mündet und im Bezug auf die erste Drehachse des Kükens in einem Winkel von näherungsweise 45° geneigt angeordnet ist.

6. Vorrichtung zur Absperrung und Verbindung von mehreren Fließwegen für Flüssigkeiten gemäß wenigstens einem der Ansprüche 2 - 4, **dadurch gekennzeichnet, daß** das Küken (6) eine Nut (13) aufweist, die zur Aufnahme eines an einem Ende des Betätigungsgriffes (2) angeonrdneten Fingers vorgesehen ist.

7. Küken mit einer Vorrichtung entsprechend einem der Ansprüche 1 - 6, mit einem Anschlußstück (3) und zwei Dichtungsringen (5a, 5b), in Fließrichtung vor und hinter dem Kükenkücken (6) angeordnet, wobei das Kücken (6) zwischen die beiden Dichtungsringe durch die Verschraubung des Anschlußstückes (3) im Gehäuse (1) festgelegt ist und wobei der Einsatz (4) zwischen wenigstens den besagten zwei Dichtungsringen, dem Gehäuse und dem Kücken eingeschlossen ist.

8. Küken nach Anspruch 7, **dadurch gekennzeichnet, daß** die Innenfläche (11) des Einsatzes (4) die Form einer Kugel mit zwei abgetrennten parallelen Ebenen aufweist und wenigstens zwei Bohrungen besitzt.

9. Küken gemäß Anspruch 7 oder 8, **dadurch gekennzeichnet, daß** der Einsatz (4) verformbar ist.

10. Küken nach einem der Ansprüche 7 - 9, **dadurch gekennzeichnet, daß** er in Kanalisationen eingesetzt ist, die Flüssigkeiten mit unterschiedlichen Temperaturen beinhalten.

## Claims

1. Device for isolating and connecting several fluid flow passages including a casing (1, 3) exhibiting at least three orifices (9a, 9b, 9c) for respective access to these passages, a plug (6) mounted so that it can rotate freely in the casing about a first axis, this plug being pierced by a first channel (9) extending along a second axis through which the first axis passes approximately perpendicularly and exhibiting two ends capable of being placed simultaneously each facing one of the orifices (9a, 9c) of the casing, in and in the vicinity of two positions of the plug in the casing in which positions the correspondence between the orifices of the casing and the ends of the first channel being reversed, these two ends being capable of being isolated from the same two orifices (9a, 9c) in and in the vicinity of at least one third position of the plug in the casing, the plug being pierced by a second channel emerging at a first end in the first channel (9), and the second end of which can be placed facing the third orifice (9b) of the casing in and in the vicinity of a specific position of the plug, the isolating and connecting device being characterized in that the second channel extends into the plug (6) along a third axis which is inclined with respect to the first axis, the said specific position of the plug in which the second end of the second channel faces the third orifice (9b) of the casing is one of the two positions of the plug in which two orifices (9a, 9c) of the casing and the ends of the first channel (9) face each other, this second end of the second channel is isolated from this third orifice in the other of these two positions, and a seal (4) including at least one drilling facing each orifice of the casing (1, 3) is inserted in a sealed manner between the plug and the casing.

2. Device for isolating and connecting several fluid flow passages according to Claim 1, characterized in that it includes, for manoeuvring the plug (6), a manoeuvring rod (2) which close to one end exhibits a cylindrical region (12), and the seal (4) surrounds the circular perimeter of this cylindrical region.

3. Device for isolating and connecting several fluid flow passages according to one of Claims 1 and 2, characterized in that it includes, to manoeuvre the plug (6), a manoeuvring rod (2) held by means of a ring (7) threaded externally and bored to the diameter of the manoeuvring rod (2).

4. Device for isolating and connecting several fluid flow passages according to Claim 3, characterized in that the ring (7) is screwed into the body (1).

5. Device for isolating and connecting several fluid flow passages according to one of Claims 1 to 4, characterized in that the plug (6) has the shape of a sphere pierced by a first channel (9) passing right through it and by a second channel emerging perpendicularly in the first channel and inclined by approximately 45 degrees relative to the first axis, about which the plug pivots.

6. Device for isolating and connecting several fluid flow passages according to at least one of Claims 2 to 4, characterized in that the plug (6) exhibits a slot (13) intended to receive an end finger (14) of the manoeuvring rod (2).

7. Cock comprising a device according to one of Claims 1 to 6, a fitting (3), and two sealing rings (5a, 5b) respectively upstream and downstream of the plug (6), the plug (6) being gripped between the two sealing rings by screwing the fitting (3) into the body (1), and the seal (4) being trapped between at least the said two sealing rings, the body and the plug.

8. Cock according to Claim 7, characterized in that the internal face (11) of the seal (4) has the shape of a sphere truncated along two parallel planes and including at least two drillings.

9. Cock according to Claim 7 or 8, characterized in that the seal (4) is deformable.

10. Cock according to one of Claims 7 to 9, characterized in that it is applied to piping containing a fluid at various temperatures.
